Europäisches Patentamt

European Patent Office

Office européen des brevets

(11) Veröffentlichungsnummer : **0 160 235**
**B1**

(12) # EUROPÄISCHE PATENTSCHRIFT

(45) Veröffentlichungstag der Patentschrift :
23.11.89

(51) Int. Cl.⁴ : **H 02 H   3/04**

(21) Anmeldenummer : 85104197.0

(22) Anmeldetag : 06.04.85

(54) Ueberwachungseinrichtung für den Auslösekreis eines elektrischen Leistungsschalters.

(30) Priorität : 04.05.84 CH 2177/84

(43) Veröffentlichungstag der Anmeldung :
06.11.85 Patentblatt 85/45

(45) Bekanntmachung des Hinweises auf die Patenterteilung : 23.11.89 Patentblatt 89/47

(84) Benannte Vertragsstaaten :
CH DE LI SE

(56) Entgegenhaltungen :
DE–A– 3 037 273
DE–B– 1 048 340
US–A– 2 907 012
US–A– 3 418 914
US–A– 3 641 552
ELECTRONICS INTERNATIONAL, Band 53, Nr. 11, Mai 1980, Seite 170; J. JAMIESON: "LR oscillator indicates inductance directly"

(73) Patentinhaber : BBC Brown Boveri AG
Haselstrasse
CH-5401 Baden (CH)

(72) Erfinder : Wacha, Gerhard
Bremgarterstrasse 39
CH-8967 Widen (CH)

**Beschreibung**

Bei der Erfindung wird ausgegangen von einer Ueberwachungseinrichtung für den Auslösekreis eines elektrischen Leistungsschalters nach dem Oberbegriff des Patentanspruchs 1.

Mit dem Oberbegriff nimmt die Erfindung auf einen Stand der Technik von Ueberwachungseinrichtungen für den Auslösekreis eines elektrischen Schalters Bezug, wie er aus der US-A-3 641 552 bekannt ist. Dort dient ein 1. Oszillator als Detektor zur Ueberwachung des Stromdurchganges durch den Auslösekreis, einer Tür- und-/oder Fensterüberwachungseinrichtung, wobei ein ohmscher Widerstand des Auslösekreises für diesen frequenzbestimmend ist. Diesem 1. Oszillator ist ein für eine kleinere Frequenz als die Frequenz des 1. Oszillators ausgelegter 2. Oszillator nachgeordnet, der solange nicht schwingt, als die Frequenz des 1. Oszillators grösser als die des 2. Oszillators ist. Bei Auftreten eines Fehlers im Auslösekreis (z. B. Kurzschluss oder Unterbrechung) unterschreitet die Frequenz des 1. Oszillators die fixe Frequenz des 2. Oszillators (oder der 1. Oszillator hört auf zu schwingen), wodurch ein Transistor des 2. Oszillators mit einer Verzögerungszeit, die der Frequenzdifferenz der beiden Oszillatoren entspricht, zu leiten beginnt und eine Alarmeinrichtung einschaltet. Der bekannte Ueberwachungskreis ist direkt an die Oszillatoren angeschlossen, so dass dessen Kontakte nicht an eine höhere Spannung angeschlossen werden können. Der Stromverbrauch der Ueberwachungseinrichtung ist nicht konstant, sondern vom Einschaltzustand des 2. Oszillators abhängig.

Aus der US-A-3 418 914 ist eine Kohlenmonoxid-Ueberwachungseinrichtung für die Fahrerkabine eines Autos bekannt, bei der eine Alarm- und Ventilationseinrichtung in Abhängigkeit vom Kippzustand eines bistabilen Kippgliedes in Form eines emittergekoppelten Schmitt-Triggers ein-/ausschaltbar ist.

In dem Prospekt der Schweizer Firma Brown, Boveri + Cie., CH-ES 64-22.1 D/E/F, Classification No. 071 401, Auslösekreisüberwachungsrelais Typ VIR 1, ist ein Auslösekreisüberwachungsrelais dargestellt und beschrieben, das ein Ueberwachungselement mit zwei Wicklungen aufweist, wobei eine Wicklung über einen Begrenzungswiderstand mit den Anschlussklemmen eines Schutzrelais in der Zuleitung zu einem Leistungsschalter und die andere Wicklung ebenfalls über einen Begrenzungswiderstand mit einem Haupt- und Hilfskontakt des Leistungsschalters verbunden sind. Ueber Schaltkontakte des Auslösekreisüberwachungsrelais ist ein Alarmrelais ein-/ausschaltbar, dessen Schaltkontakte im Stromkreis einer Alarmeinrichtung mit separater Alarmspannung angeordnet sind. Das Auslösekreisüberwachungsrelais spricht bei dieser Ueberwachungseinrichtung auf einen Kurzschluss der Ausschaltspule des Leistungsschalters oder auf eine starke Vergrösserung des Widerstandes der Ausschaltspule z. B. durch Korrosion nicht an.

Die Erfindung, wie sie im Patentanspruch 1 definiert ist, löst die Aufgabe, den Auslösekreis eines Leistungsschalters auf Unterbrechung der Zuleitungen und auf Kurzschluss der Auslösespule zu überwachen, ohne dass eine eigene Stromversorgung für die Ueberwachungseinrichtung erforderlich ist. Dabei soll der Auslösekreis an unterschiedliche Speisespannungen anschliessbar sein.

Ein Vorteil der Erfindung besteht darin, dass ohne zusätzliche Kosten eine höhere Sicherheit der Fehlererfassung für Leistungsschalter-Auslösekreise gewährleistet werden kann. Der Auslösekreis des Leistungsschalters kann auch auf Ausfall der Auslösespannung und auf fehlerhaften Schaltungsablauf überwacht werden.

Die Ueberwachungseinrichtung eignet sich für Leistungsschalter, die über Schutzrelaiskontakte an die Auslösespannung gelegt werden oder über Schaltthyristoren, die ohne Probleme löschen können, was bei Verwendung eines Auslösekreisüberwachungsrelais mit Haltestrom nicht ohne weiteres möglich ist. Es können auch Steuerkreise mit Parallelschaltung von Leistungsschalter-Auslösespulen und Steuerrelais z. B. zur Anregung von Schalter-Reserveschutzeinrichtungen überwacht werden. Ferner besteht die Möglichkeit zur Ueberwachung von Steuerkreisen, in denen statt der Leistungsschalter-Ausschaltspule ein Hauptauslöserelais für viele Kontakte und Signale (master trip relay) überwacht wird.

Ein weiterer Vorteil besteht darin, dass kein Auslösekreisüberwachungsrelais mit mechanischen Kontakten erforderlich ist.

Zur Stromversorgung der Ueberwachungseinrichtung wird als Alarmspannung die Auslösespannung der Anlage verwendet. Die Stromaufnahme der Ueberwachungseinrichtung ist konstant, so dass die Anpassung an verschiedene Auslösespannungen mittels Vorwiderständen möglich ist. Bei Ausfall dieser Spannung erfolgt eine unverzögerte Alarmgebung.

Begrenzungswiderstände in den Zuleitungen der Wicklungen des Ueberwachungselementes des Auslösekreisüberwachungsrelais entfallen.

Zum einschlägigen Stand der Technik wird zusätzlich auf die DE-OS 3 037 273 verwiesen, aus der ein elektronisches Auslösekreis-Ueberwachungsgerät mit einer Optokopplerdiode zwischen drei Messsignal-Eingangsstufen und einer Meldestufe zur visuellen und/oder akustischen Fehlersofortmeldung bekannt ist. Dieses Ueberwachungsgerät arbeitet nach dem Prinzip der Stromüberwachung, wobei der Spannungsabfall an zwei in Reihe geschalteten Leistungsdioden im Stromkreis des Leistungsschalters detektiert wird. Der für die Funktionsüberwachung im Auslösekreis notwendige Messstrom von ca. 20 mA wird durch Beschaltung der Schutzauslösekontakte sowie von Leistungsschalter-Hilfskontakten mit glasierten Drahtwiderständen erzeugt. Die Meldestufe spricht an, wenn der Messstrom in einer der Messignal-Eingangsstufen ca. 12 mA unterschreitet. Zum Schutz vor Ueberspannungen im Fehlerfalle eines Hochohmigwerdens einer Leistungsdiode ist in jeder Eingangsstufe parallel zu den zwei Leistungsdioden eine Zenerdiode vorgesehen, die für Kurzzeitströme von 10 A bemessen ist. Nachteilig dabei ist die Anordnung von vergleichsweise stark ausfallgefährdeten Leistungsdioden und von Leistungsschalter-Hilfskontakten im Auslösekreis sowie das Parallelschalten von glasierten Drahtwiderständen.

Die Erfindung wird nachstehend anhand eines Ausführungsbeispiels erläutert. Es zeigen :

Fig. 1 ein Prinzipschaltbild der Ueberwachungseinrichtung und

Fig. 2 eine Schaltungsanordnung der in Fig. 1 durch Blockschaltbilder dargestellten Geräte bzw. Vorrichtungen.

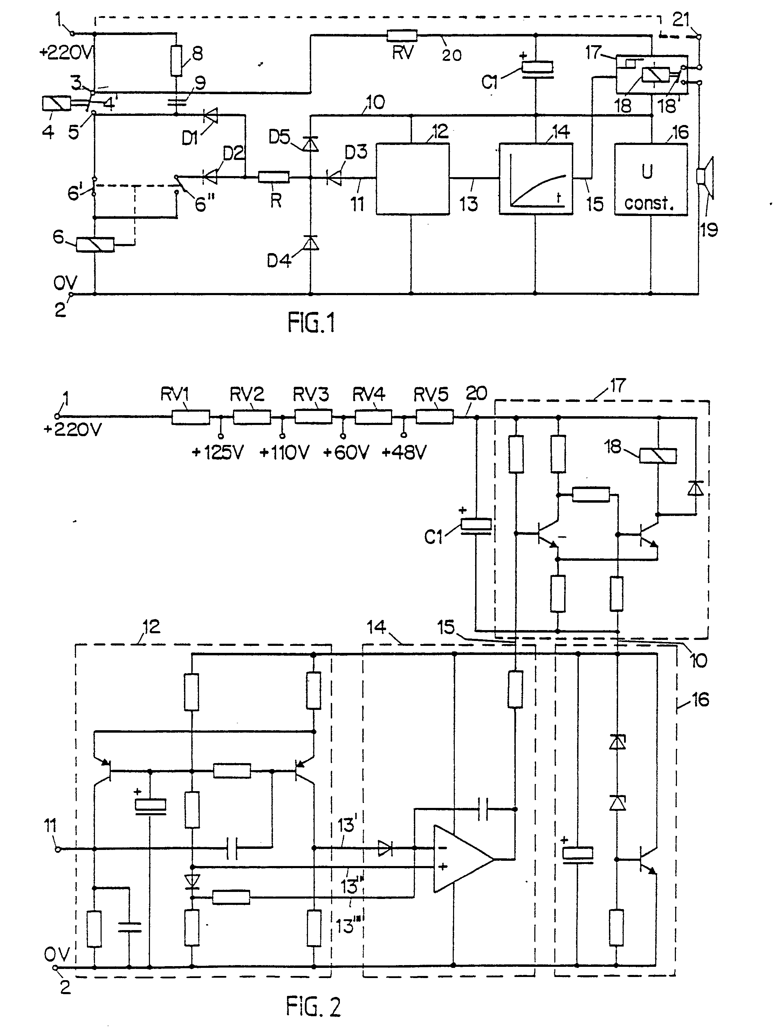

In Fig. 1 ist mit 1 eine positive Spannungsklemme für eine Auslösespannung von 220 V bezeichnet und mit 2 eine negative Spannungsklemme für eine Erdleiterspannung von 0 V. Die positive Spannungsklemme 1 ist mit einer Anschlussklemme 3 eines Schutzrelaiskontaktes 4' eines Schutzrelais (4, 4') mit einem Schutzrelaismesselement 4 elektrisch verbunden. Die zweite Anschlussklemme des Schutzrelaiskontaktes 4' ist mit 5 bezeichnet. Sie ist über einen geschlossenen Leistungsschalter-Absteuerkontakt 6' eines Leistungsschalters und über dessen Ausschaltspule 6 mit der negativen Anschlussklemme 2 elektrisch verbunden. Mit 6" ist ein Leistungsschalter-Hilfskontakt des Leistungsschalters bezeichnet, der geöffnet ist, wenn der Leistungsschalter-Absteuerkontakt 6' geschlossen ist und der geschlossen ist, wenn 6' geöffnet ist.

Die zweite Anschlussklemme des Leistungsschalter-Hilfskontaktes 6" ist mit der Kathode einer Avalanche-Diode D2 mit hoher Durchbruchspannung elektrisch verbunden. Die Anode dieser Diode D2 ist über eine gleich gepolte Avalanche-Diode D1 mit der Anschlussklemme 5 sowie über einen Widerstand R mit der Kathode einer Diode D3, mit der Kathode einer Diode D4 und mit der Anode einer weiteren Diode D5 elektrisch verbunden. Die Anode der Diode D3 ist an einen Widerstandseingang 11 eines Oszillators 12 angeschlossen. Die Diode D3 dient zum Abblocken der polaritätsempfindlichen Stufe des Eingangstransistors des Oszillators 12. Die Anode der Diode D4 ist an die negative Spannungsklemme 2 angeschlossen und die Kathode der Diode D5 an eine Spannungsleitung 10. Ueber diese Spannungsleitung 10 werden der Oszillator 12, ein Verzögerungsglied 14 und ein Spannungskonsthalter 16 mit positiver Speisespannung versorgt, und zwar über ein bistabiles Kippglied bzw. einen Schmitt-Trigger 17. Der Schmitt-Trigger 17 ist über eine Speiseleitung 20 und einen Vorwiderstand RV mit der Anschlussklemme 3 des Schutzrelaiskontaktes 4' elektrisch verbunden, er ist damit Teil des Vorwiderstandes des Spannungskonsthalters 16.

Zwischen der positiven Spannungsklemme 1 und der Anschlussklemme 5 des Schutzrelaiskontaktes 4' ist ein Dämpfungswiderstand 8 mit einem Dämpfungskondensator 9 in Reihe geschaltet, um Spannungsspitzen beim Oeffnen des Schutzrelaiskontaktes 4' zu dämpfen. Dieser Löschkreis hat keine nachteilige Auswirkungen auf die Ueberwachungsfunktion des Oszillators auf Durchgang der überwachten Strecke des Kreises.

Der Oszillator 12 ist ausgangsseitig über eine Signalleitung 13 bzw. über Signalleitungen 13', 13" und 13''', vgl. Fig. 2, mit dem Signaleingang des Verzögerungsgliedes 14 bzw. mit Signaleingängen eines als Differenzverstärker ausgebildeten Zeitgliedes verbunden. Das Verzögerungsglied ist für eine Verzögerung von 500 ms ausgelegt. Es ist ausgangsseitig über eine Signalleitung 15 mit dem Steuereingang eines emittergekoppelten Schmitt-Triggers verbunden.

Der Schmitt-Trigger 17 weist anstelle des sonst üblichen Kollektorwiderstandes des ausgangsseitigen Transistors eine Alarmrelais-Spule 18 eines Alarmrelais (18, 18') auf. Ein Alarmrelais-Kontakt 18' des Alarmrelais ist in der Stromzuleitung einer Alarmeinrichtung 19 angeordnet. Die Alarmeinrichtung 19 ist über eine positive Spannungsklemme 21 von einer Alarmspannung gespeist ; sie kann auch direkt von der Auslösespannung gespeist werden.

Anstelle eines einzigen Vorwiderstandes können mehrere Vorwiderstände RV1-RV5, siehe Fig. 2, mit mehreren Spannungsklemmen zum Anschluss kleinerer Auslösespannungen von 125 V oder 110 V oder 60 V oder 48 V vorgesehen sein.

Zur Dämpfung von Oberschwingungen ist parallel zum Schmitt-Trigger 17 ein polarisierter Elektrolytkondensator C1 geschaltet.

Der Spannungskonsthalter 16 weist einen Glättungskondensator, parallel dazu zwei mit einem Widerstand in Reihe geschaltete Zenerdioden und einen basisgesteuerten Leistungstransistor auf ; er hält die Speisespannung für den Oszillator 12 und das Verzögerungsglied 14 auf ca. 12 V konstant.

Der Oszillator 12 bringt die Leistungsschalter-Ausschaltspule 6 über die Diode D3, den Widerstand R, die Diode D1, die Anschlussklemme 5 und den geschlossenen Leistungsschalter-Absteuerkontakt 6' oder, bei geschlossenem Leistungsschalter-Hilfskontakt 6", über diesen und die Diode D2, den Widerstand R und die Diode D3 zum Schwingen. Die Schwingung wird überwacht. Bei Ausbleiben der Schwingung wird über das Verzögerungsglied 14 ein verzögerter Alarm ausgelöst. Der Differenzverstärker des Verzögerungsgliedes 14 erzeugt ausgangsseitig eine Kippspannung, die im störungsfreien Fall unterhalb 200 mV bleibt und im Störfall innerhalb von 500 ms auf etwa 12 V ansteigen kann und dann den Schmitt-Trigger triggert, wodurch das Alarmrelais 18, 18' anspricht und über den Alarmrelais-Kontakt 18' die Alarmeinrichtung 19 betätigt. Der Alarm kann akustisch und/oder optisch in üblicher bzw. gewünschter Weise gegeben werden.

Statt eines Alarmrelais-Kontaktes 18' können auch mehrere gleichzeitig betätigte Kontakte für unterschiedliche Funktionen vorgesehen sein.

Anstelle der in Fig. 2 angegegebenen Schaltungen für den Oszillator 12, das Verzögerungsglied 14, den Spannungskonstanthalter 16 und den Schmitt-Trigger 17 können auch andere bekannte Schaltungen solcher Geräte bzw. Einrichtungen verwendet werden. Wichtig ist, dass der zu überwachende Auslösekreis mit einer Oszillatorschwingung beaufschlagt wird, dass eine Verstimmung des Oszillators mit nachfolgendem Ausbleiben der Oszillatorschwingung überwacht wird und dass in Abhängigkeit davon mit einer vorgebbaren Verzögerung ein Alarm ausgelöst wird.

**Patentansprüche**

1. Ueberwachungseinrichtung für den Auslösekreis (6, 6', 6") eines elektrischen Leistungsschalters

a) mit einem Oszillator (12) als Detektor zur Ueberwachung der Stromdurchgängigkeit durch den Auslösekreis, welcher Detektor in Abhängigkeit von einem Fehlerzustand ein Alarmsignal erzeugt,

b) wobei ein ohmscher und/oder induktiver Widerstand (6) des zu überwachenden Auslösekreises frequenzbestimmender Widerstand des Oszillators (12) ist,

c) mit einem Verzögerungsglied (14) mit vorgebbarer Zeitkonstante, das dem Oszillator (12) nachgeordnet ist, und

d) mit einer Alarmeinrichtung (19), die in Abhängigkeit vom Ausgangssignal des Verzögerungsgliedes (14) ein-/ausschaltbar ist und in Abhängigkeit von dem Alarmsignal den Fehlerzustand anzeigt, dadurch gekennzeichnet,

e) dass das Ausgangssignal des Verzögerungsgliedes (14) dem Eingang eines emittergekoppelten Schmitt-Triggers zugeführt ist,

f) dass eine Alarmrelais-Spule (18) eines Alarmrelais (18, 18') als Kollektorwiderstand des ausgangsseitigen Transistors des Schmitt-Triggers (17) geschaltet ist und

g) dass die Stromversorgung des Oszillators (12) über den Schmitt-Trigger (17) mit der eingangsseitigen Anschlussklemme (3) eines Schutzrelaiskontaktes (4') eines Schutzrelais (4, 4') in Wirkverbindung steht.

2. Ueberwachungseinrichtung, nach Anspruch 1, dadurch gekennzeichnet, daß

a) der Oszillator (12) über mindestens eine Schutzeinrichtung (D1-D5, R) mit dem ohmschen und/oder induktiven Widerstand (6) des zu überwachenden Auslösekreises in Wirkverbindung steht, welche Schutzeinrichtung zumindest gewährleistet, dass auftretende Schalt-Ueberspannungen nicht auf den Eingang des Oszillators (12) gelangen,

b) dass die Schutzeinrichtung eine Reihenschaltung aus einer ersten und/oder zweiten Avalanche-Diode (D1, D2) mit einem Widerstand (R) aufweist,

c) der mit dem Widerstands-Eingang (11) des Oszillators (12) in Wirkverbindung steht, und

d) dass der Widerstandseingang des Oszillators ferner mit der Kathode einer Diode (D4), die anodenseitig mit einer negativen Spannungsklemme (2) des Oszillators (12) elektrisch verbunden ist, und

e) mit der Anode einer weiteren Diode (D5), welche kathodenseitig mit einer Spannungsleitung (10) zur Stromversorgung des Oszillators (12) elektrisch verbunden ist, in Wirkverbindung steht.

3. Ueberwachungseinrichtung nach Anspruch 2, dadurch gekennzeichnet,

a) dass der Auslösekreis (6, 6', 6") für den Leistungsschalter ein Relais aufweist,

b) dass die erste oder zweite Diode (D1, D2) über eine ausgangsseitige Anschlussklemme (5) des Schutzrelaiskontaktes (4') und

c) über einen Schaltkontakt (6', 6") dieses Relais,

d) mit dessen Ausschaltspule (6) in Wirkverbindung steht.

4. Ueberwachungseinrichtung nach Anspruch 3, dadurch gekennzeichnet, dass zwischen der ausgangsseitigen Anschlussklemme (5) des Schutzrelaiskontaktes (4') und einer positiven Spannungsklemme (1) des Auslösekreises des Leistungsschalters ein Löschkreis mit einer Reihenschaltung aus einem Dämpfungskondensator (9) und einem Dämpfungswiderstand (8) vorgesehen ist.

**Claims**

1. Monitoring device for the tripping circuit (6, 6', 6") of an electric circuit-breaker

a) with an oscillator (12) as detector for the monitoring of the current continuity through the tripping circuit, which detector generates an alarm signal in dependence on a fault state,

b) an ohmic and/or inductive resistor (6) of the tripping circuit to be monitored being frequency-determining resistance of the oscillator (12),

c) with a delay element (14) with predeterminable time constant, which is arranged downstream of the oscillator (12), and

d) with an alarm device (19), which can be switched on/off in dependence on the output signal of the delay element (14) and indicates the fault state in dependence on the alarm signal, characterized in that

e) the output signal of the delay element (14) is fed through the input of an emitter-coupled Schmitt trigger,

f) an alarm relay coil (18) of an alarm relay (18, 18') is connected as collector resistance of the output-side transistor of the Schmitt trigger (17)

g) the current supply of the oscillator (12) is in effective connection via the Schmitt trigger (17) with the input-side connection terminal (3) of a protective relay contact (4') of a protective relay (4, 4').

2. Monitoring device according to Claim 1, characterized in that

a) the oscillator (12) is in effective connection via at least one protective device (D1-D5, R) with the ohmic and/or inductive resistor (6) of the tripping circuit to be monitored, which protective device at least ensures that switching overvoltages occurring do not reach the input of the oscillator (12),

b) the protective device has a series circuit of a first and/or second avalanche diode (D1, D2) with a resistor (R),

c) which is in effective connection with the resistance input (11) of the oscillator (12), and

d) the resistance input of the oscillator is, furthermore, in effective connection with the cathode of a diode (D4), which is electrically connected on the anode side to a negative voltage terminal (2) of the oscillator (12), and

e) is in effective connection with the anode of a further diode (D5), which is electrically connected on the cathode side to a voltage line (10) for the current supply of the oscillator (12).

3. Monitoring device according to Claim 2, characterized in that

a) the tripping circuit (6, 6', 6") for the circuit-breaker has a relay,

b) the first or second diode (D1, D2) is in effective connection via an output-side connection terminal (5) of the protective relay contact (4') and

c) via a switching contact (6', 6") of this relay,

d) with its output coil (6).

4. Monitoring device according to Claim 3, characterized in that an extinction circuit with a series connection comprising a damping capacitor (9) and a damping resistor (8) is provided between the output-side connection terminal (5) of the protective relay contact (4') and a positive voltage terminal (1) of the tripping circuit of the circuit-breaker.

**Revendications**

1. Dispositif de surveillance pour le circuit de déclenchement (6, 6', 6") d'un interrupteur de puissance électrique :

a) comportant un oscillateur (12) en tant que détecteur pour surveiller les possibilités de passage du courant à travers le circuit de déclenchement, ce détecteur produisant un signal d'alarme en fonction d'un état de défaut,

b) une résistance ohmique et/ou inductive (6) du circuit de déclenchement à surveiller étant une résistance déterminant la fréquence de l'oscillateur (12),

c) comportant un élément à retard (14) présentant une constante de temps pouvant être prédéfinie, qui est installé en aval de l'oscillateur (12), et

d) comportant un dispositif d'alarme (19), qui peut être enclenché/déclenché en fonction du signal de sortie de l'élément à retard (14) et indique l'état de défaut en fonction du signal d'alarme, caractérisé en ce que :

e) le signal de sortie de l'élément à retard (14) est appliqué à l'entrée d'une bascule de Schmitt à couplage d'émetteur,

f) qu'une bobine relais d'alarme (18) d'un relais d'alarme (18, 18') est connectée en tant que résistance de collecteur du transistor de sortie de la bascule de Schmitt (17), et

g) que l'alimentation de courant de l'oscillateur (12) est en liaison active, par l'intermédiaire de la bascule de Schmitt (17), avec la borne de connexion d'entrée (3) d'un contact de relais de protection (4') d'un relais de protection (4, 4').

2. Dispositif de surveillance suivant la revendication 1, caractérisé en ce que :

a) l'oscillateur (12) est en liaison active, par l'intermédiaire d'au moins un dispositif de protection (D1-D5, R), avec la résistance ohmique et/ou inductive (6) du circuit de déclenchement à surveiller, ce dispositif de protection garantissant au moins que des surtensions de commutation qui se produisent ne parviennent pas à l'entrée de l'oscillateur (12),

b) que le dispositif de protection comporte un montage en série d'une première et/ou d'une seconde diode à avalanche (D1, D2) avec une résistance (R),

c) qui est en liaison active avec l'entrée à résistance (11) de l'oscillateur (12), et

d) que l'entrée à résistance de l'oscillateur est, en outre, en liaison active avec la cathode d'une diode (D4), qui, du côté anode, est connectée électriquement à une borne de tension négative (2) de l'oscillateur (12), et

e) avec l'anode d'une autre diode (D5), qui, du côté cathode, est connectée électriquement à une ligne de tension (10) pour fournir du courant à l'oscillateur (12).

3. Dispositif de surveillance suivant la revendication 2, caractérisé en ce que :

a) le circuit de déclenchement (6, 6', 6") comporte un relais pour l'interrupteur de puissance,

b) que la première ou la seconde diode (D1, D2) est en liaison active, par l'intermédiaire d'une borne de connexion (5) située du côté sortie du contact de relais de protection (4'), et

c) par l'intermédiaire d'un contact de commutation (6, 6") de ce relais,

d) à sa bobine de mise hors circuit (6).

4. Dispositif de surveillance suivant la revendication 3, caractérisé en ce qu'entre la borne de connexion (5) du côté sortie du contact de relais de protection (4') et une borne de tension positive (1) du circuit de déclenchement de l'interrupteur de puissance, est prévu un circuit d'amortissement comportant un montage en série d'un condensateur d'amortissement (9) et d'une résistance d'amortissement (8).

FIG.1

FIG. 2